Europäisches Patentamt

European Patent Office

Office européen des brevets

(11) Veröffentlichungsnummer: **0 499 128 A2**

## (12) EUROPÄISCHE PATENTANMELDUNG

(21) Anmeldenummer: **92101899.0**

(22) Anmeldetag: **05.02.92**

(51) Int. Cl.5: **G02F 2/00**, G02F 1/01

(30) Priorität: **13.02.91 DE 4104366**

(43) Veröffentlichungstag der Anmeldung:
**19.08.92 Patentblatt 92/34**

(84) Benannte Vertragsstaaten:
**AT BE CH DE FR GB IT LI NL**

(71) Anmelder: **SIEMENS AKTIENGESELLSCHAFT**
**Wittelsbacherplatz 2**
**W-8000 München 2(DE)**

(72) Erfinder: **Das, Chandan, Dipl.-Ing.**
**Laubenweg 4**
**W-8027 Neuried(DE)**

(54) **Gegen Blockierung gesicherte Polarisationsregelung.**

(57) Insbesondere für optische Überlagerungs-Empfänger ist es notwendig, die Polarisation des lokal erzeugten Lichtes der des Empfangslichtes nachzuregeln. Bei derartigen Polarisationsregelungen kann, sofern die Drehachsen der Polarisation der verwendeten doppelbrechenden Elemente in einer Ebene bezogen auf die Poincaré-Kugel liegen, eine Blockierung auftreten. Erfindungsgemäß wird die Blockierung dadurch aufgehoben, daß bei Unterschreiten eines vorgegebenen Wertes der Intensität eines erzeugten Vergleichssignals eine neue Modulationsorientierung der Polarisation des geregelten Lichtsignals erzeugt wird.

FIG 1

EP 0 499 128 A2

Die Erfindung betrifft ein Verfahren zur Polarisationsregelung entsprechend dem Oberbegriff des Anspruchs 1.

Aus der EP-Al-0 248 234 ist ein Verfahren zur Polarisationsregelung eines Lichtsignals bekannt, bei dem das Lichtsignal drei doppelbrechende Elemente eines Polarisationstransformators durchläuft und die Doppelbrechungen der drei Elemente in Abhängigkeit von Stellsignalen kontinuierlich verändert werden. Die Stellsignale werden dabei durch Vergleich der Polarisation wenigstens eines kohärenten Lichtsignals mit einem Referenzpolarisationszustand, das kann der Polarisationszustand eines zweiten Lichtsignals oder eines polarisationsselektiven Elementes sein, mittels eines Analysators oder eines Überlagerungsempfängers erzeugt. Unter Doppelbrechung eines Lichtsignals wird dabei und auch im folgenden die Verzögerung verstanden, die zwischen zwei mit jeweils einem Eigenmodus des die Doppelbrechung verursachenden Elementes auftretenden Lichtkomponenten feststellbar ist, diese beiden Eigenmoden unterscheiden sich durch ihre Ausbreitungsgeschwindigkeit.

Beim genannten Stand der Technik werden den Stellsignalen für die doppelbrechenden Elemente Rechteck- oder Sinussignale vergleichsweise kleiner Amplitude überlagert, die zu einer Modulation der Doppelbrechung des betreffenden Elementes führen, so daß sich modulationsbedingte Intensitätsänderungen des optischen Vergleichssignals ergeben, die nach der opto-elektrischen Umwandlung beispielsweise am Ausgang eines Überlagerungsempfängers zu Amplitudenänderungen des elektrischen Ausgangssignals führen. Beim genannten Stand der Technik dienen jeweils zwei doppelbrechende Elemente zur Einstellung eines bestimmten Polarisationszustandes des abgegebenen Lichtsignals, das dritte Element dient zur Sicherstellung der Endlos-Regelung, wenn der Arbeitspunkt eines der beiden anderen Elemente an einer Verstellgrenze angelangt ist und dieses betreffende Element zurückgestellt werden muß. Dadurch soll verhindert werden, daß es während der Rückstellung dieses Elementes zu unerwünschten Polarisationszuständen des Ausgangssignals des Polarisationstransformators kommt, die einen Überlagerungsempfang von Lichtsignale unmöglich machen.

Es hat sich gezeigt, daß auch eine Polarisationsregelung, die als Endlos-Regelung unterbrechungsfrei einen bestimmten Polarisationszustand des Lichtes am Eingang in jedem beliebigen Polarisationszustand des Lichtes am Ausgang des Polarisationstransformators umformen kann, keine vollständige Sicherheit gegen Intensitätseinbrüche des optischen Vergleichssignals und damit des elektrischen Ausgangssignals beispielsweise eines Überlagerungsempfängers bietet. Entsprechende Untersuchungen haben ergeben, daß derartige Polarisationsregelsysteme an bestimmten Arbeitspunkten der einzelnen doppelbrechenden Elemente Schwachstellen aufweisen und blockieren können, so daß eine weitere Regelung der Polarisation nicht mehr möglich ist. Diese Störungen treten auch bei Polarisationsregelsystemen mit mehr als drei doppelbrechenden Elementen auf und hängen zumindest teilweise damit zusammen, daß praktisch nur nichtideale doppelbrechende Elemente eingesetzt werden können und daß auch die zu transformierende Polarisation des Eingangslichtes vom vorgesehenen Wert abweichen kann.

Die Aufgabe bei der vorliegenden Erfindung besteht also darin, die Polarisationsregelung bei einem Verfahren der eingangs genannten Art auch bei Auftreten von Eingangslicht mit nichtidealer Eingangspolarisation und bei Verwendung von nichtidealen doppelbrechenden Elementen sicherzustellen.

Erfindungsgemäß wird die Aufgabe bei dem eingangs genannten Verfahren dadurch gelöst, daß dieses durch die im Kennzeichen des Patentanspruchs 1 angegebenen Merkmale weitergebildet ist.

Bezogen auf die Darstellung der Polarisationszustände auf der Poincaré-Kugel weist die durch die Modulation der doppelbrechenden Elemente verursachte Änderung des Polarisationszustandes des Ausgangslichtes eine bestimmte Richtung auf, die als Modulationsorientierung bezeichnet wird. Die Erfindung beruht nun auf der Erkenntnis, daß bei Blockade der Regelung diese Modulationsorientierung - also die mögliche Veränderung des Polarisationszustandes am betrachteten Arbeitspunkt - senkrecht zur Verbindung zwischen diesen Arbeitspunkt und dem gewünschten Arbeitspunkt auf der Poincaré-Kugel steht. Dann kann offenbar mit weiterer Veränderung der Doppelbrechung des gerade modulierten doppelbrechenden Elementes keine weitere Annäherung an den gewünschten Soll-Arbeitspunkt auf der Poincare-Kugel erreicht werden, für die Regeleinrichtung ist damit die optimale Annäherung an den gewünschten Sollarbeitspunkt eingeregelt und eine weitere Regelung unterbleibt, solange nicht eine wesentliche Änderung der Modulationsorientierung erreicht wird. Das erfindungsgemäße Verfahren bietet die vorteilhafte Möglichkeit, das es mit einer Endlos-Regelung kombinierbar ist und daß es mit einem vergleichsweise geringem Zusatzaufwand realisierbar ist. Zweckmäßige Ausbildungen des erfindungsgemäßen Verfahrens sind in Patentansprüchen 2 bis 10 näher beschrieben.

Die Erfindung soll im folgenden anhand eines in der Zeichnung dargestellten Ausführungsbeispiels näher erläutert werden.

In der Zeichnung zeigt

Fig. 1     die schematische Darstellung einer bekannten Anordnung zur Polarisationsregelung für den optischen Überlagerungsempfang,

Fig. 2     die Darstellung von Verstellwegen auf der Poincaré-kugel von zwei geregelten Elementen der Anordnung nach Fig. 1,

Fig. 3     die Darstellung der Blockierung der Regelung nach Fig. 1 anhand der Poincaré-Kugel und

Fig. 4     die Übernahme der Regelung durch zwei weitere geregelte Elemente, die die Blockade nach Fig. 3 aufheben.

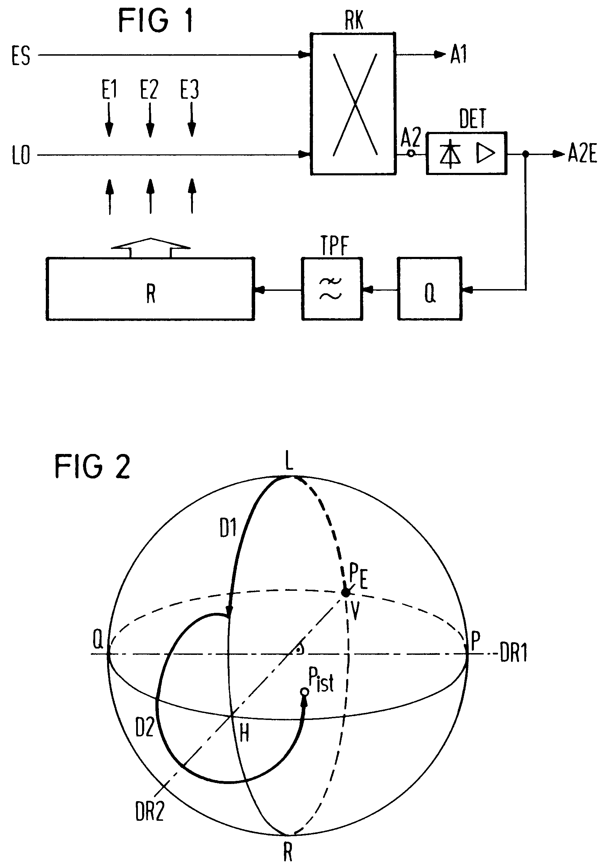

In der Fig. 1 ist die aus der eingangs erwähnten EP-AI-0 248 234 bekannte Anordnung zur Polarisationsregelung schematisch dargestellt. Beim Anwendungsfall des optischen Überlagerungsempfangs besteht das Problem darin, daß ein empfangenes Lichtsignal mit unbekannter Polarisation und äußerst geringer Leistung mit dem von einem lokalen Laser erzeugten zweiten Lichtsignal gleicher Polarisation überlagert werden soll. Wegen der geringen Lichtleistung des Empfangslichtes ist es dabei zweckmäßig, das Licht des lokalen Lasers durch den Polarisationstransformator zu leiten, da dieses Licht mit ausreichender Amplitude zur Verfügung steht. Die Polarisationsregelung hat in diesem Fall die Aufgabe, Licht mit einer festgelegten Polarisation in Licht mit einer gewünschten Polarisation in Abhängigkeit von der Polarisation des Empfangslichts umzuformen. Die bekannte Anordnung zur Polarisationsregelung weist einen ersten Eingang ES auf, an dem das Empfangslicht ansteht, das an den zugeordneten Eingang eines Richtkopplers RK weitergeleitet wird. Ein zweiter Eingang L0 ist mit einem lokalen Laser verbunden und erhält somit ein Lichtsignal mit bekannter Polarisation und vergleichsweiser hoher Leistung, das über drei doppelbrechende Elemente E1, E2, E3 einem weiteren Eingang des Richtkopplers RK zugeführt wird. Neben dem ersten optischen Ausgang A1 für Meßzwecke, enthält der Richtkoppler RK einen zweiten optischen Ausgang A2 für einen nachgeschalteten Detektor DET, der eine Fotodiode mit nachgeschaltetem Fotostrom-Verstärker enthält. An den Detektorausgang A2E sind weitere Anordnungen zur Signalverarbeitung und ein Quadrierer Q als Teil der Anordnung zur Polarisationsregelung angeschlossen. Der Ausgang des Quadrierers Q ist über ein Tiefpaßfilter TPF mit einem Steuereingang eines Reglers R verbunden, der die aus den drei doppelbrechenden Elementen E1, E2, E3 bestehende Stelleinrichtung ansteuert. Der Regler R gibt dazu Stellsignale an die doppelbrechende Elemente ab, außerdem werden wenigstens zwei Stellsignale mit vergleichsweise kleinen Rechtecksignalen moduliert. Durch die Rechteckmodulation ergeben sich kleine Abweichungen von den Doppelbrechungsarbeitspunkten beispielsweise des ersten und des zweiten doppelbrechenden Elementes E1, E2, die sich in kleinen Phasenänderungen und in kleinen Intensitätsänderungen, also Leistungsänderungen, des Überlagerungssignals, und damit nach Quadrierung in Amplitudenänderungen des Regelsignals für den Regler R auswirken. Vom Regler R werden daraus alle Ableitungen ersten und zweiten Grades der Intensität nach den Doppelbrechungen des ersten und des zweiten Elementes E1, E2 näherungsweise gebildet. Es ist in diesem Zusammenhang auch möglich, die Abweichungen von den Doppelbrechungsarbeitspunkten beispielsweise mittels Frequenzmultiplex festzustellen. Der Regler R verstellt die beiden doppelbrechenden Elemente E1, E2 in Richtung des Gradienten aus Intensitätsänderung und Doppelbrechungsänderung, durch die Auswertung der zweiten Ableitungen werden Sattelpunkte und minimale Intensität des Überlagerungssignals erkannt und normalerweise in Richtung auf ein Maximum verlassen. Bei maximaler Intensität des Überlagerungssignals stimmen die Polarisationszustände des Empfangslichtes und des lokal erzeugten Lichtes überein, wegen der gegenüber der Regelgeschwindigkeit vergleichsweise langsamen Polarisationsschwankung des Eingangslichtes können die mittels bekannter Faserquetscher realisierten doppelbrechenden Elemente auch bei Nachregelvorgängen den Änderungen ausreichend schnell folgen.

Zu Erläuterung eines Nachregelvorganges dient die in der Fig. 2 dargestellte Poincaré-Kugel, auf deren Oberfläche die Polarisation $P_E$ des Eingangslichtes des Polarisationstransformators und die Polarisation $P_{IST}$ des entsprechenden Ausgangslichtes dargestellt sind. Die Eingangspolarisation $P_E$ liegt auf einem Großkreis, der die Horizontalebene vertikal schneidet, es wird von einem vertikal linear polarisierten Eingangslicht ausgegangen, das mittels der beiden doppelbrechenden Elemente in Licht einer beliebigen Ausgangspolarisation $P_{IST}$ umgeformt werden soll. Zu diesem Zweck sind die Drehachsen DR1, DR2 des ersten und des zweiten doppelbrechenden Elementes E1, E2 senkrecht aufeinander stehend so in der horizontalen Ebene angeordnet, daß die Polarisation $P_E$ des Eingangslichtes des Polarisationstransformators wenigstens annähernd mit dem Durchstoßpunkt der Drehachse DR2 des zweiten doppelbrechenden Elementes E2 durch die Poincarésphäre übereinstimmt. Da die beiden Drehachsen DR1, DR2 aufeinander senkrecht stehen, fällt der verstellweg D1 des ersten doppelbrechenden Elementes E1 auf den Großkreis, auf dem sich die Eingangspolarisation befindet. An den verstellweg D1 des ersten doppelbrechenden Elementes E1 schließt sich der Verstellweg D2 des zweiten doppelbrechenden Elementes E2 an. Die Verstellwege sind dabei jeweils Kreisabschnitte, die auf einer Ebene senkrecht zu den Drehachsen DR1, DR2 der doppelbrechenden Elemente liegen. Die Bewegungen der Ausgangspolarisation $P_{IST}$ bei der Modulation des ersten und des zweiten doppelbrechenden Elementes stehen senkrecht aufeinander, so daß aus den entsprechenden Gradienten die Regelungen der beiden Elemente bei beliebig wandernder Soll-Polarisation zunächst gewährleistet ist. Als doppelbrechende Elemente für diese Polarisationsregelung kommen dabei neben den erwähnten Faserquetschern auch Flüssigkristallsteller, Faraday-Rotatoren, bewegliche doppelbrechende Elemente sowie Lithiumniobat-Elemente oder andere elektro-optische Kristalle zur Anwendung.

Ein erstes Problem für die bekannte Polarisationsregelung tritt auf, wenn die Polarisation des am Empfängereingang ES ankommenden Lichtes und damit die Stellpolarisation für das Ausgangslicht des Polarisationstransformators zufällig auf einem Durchstoßpunkt der Drehachse des zweiten doppelbrechenden Elementes durch die Poincarésphäre liegt. Endet der Verstellweg des ersten doppelbrechenden Elementes D1 in einem der beiden Durchstoßpunkte, dann verschwindet der die Intensitätsänderungen in Abhängigkeit von den Doppelbrechungsänderungen des zweiten doppelbrechenden Elementes beschreibende zweite Gradient GRAD2. Wandert nun die Polarisation des am Eingang ES ankommenden Lichtes senkrecht zum ersten Verstellweg D1 von den Punkten V bzw. H weg, dann bleiben erster und zweiter Gradient beim Nullwert, die Regelung erhält also keine Information über die Richtung oder die Größe der Bewegung der Soll-Polarisation und es kann am Ausgang des Detektors DET der Anordnung nach der Fig. 1 zum Intensitätseinbruch kommen oder - falls die Soll-Polarisation zunächst am Punkt V lag, kann es sein, daß die Regelung nicht anspringt. In beiden Fällen ist insbesondere bei der Übertragung von digitalen Signalen mit hoher Bitrate mit erheblichen Übertragungsstörungen bis zum Totalausfall zu rechnen, die aber in der Regel nur kurzzeitig sind, da der Zustand labil ist.

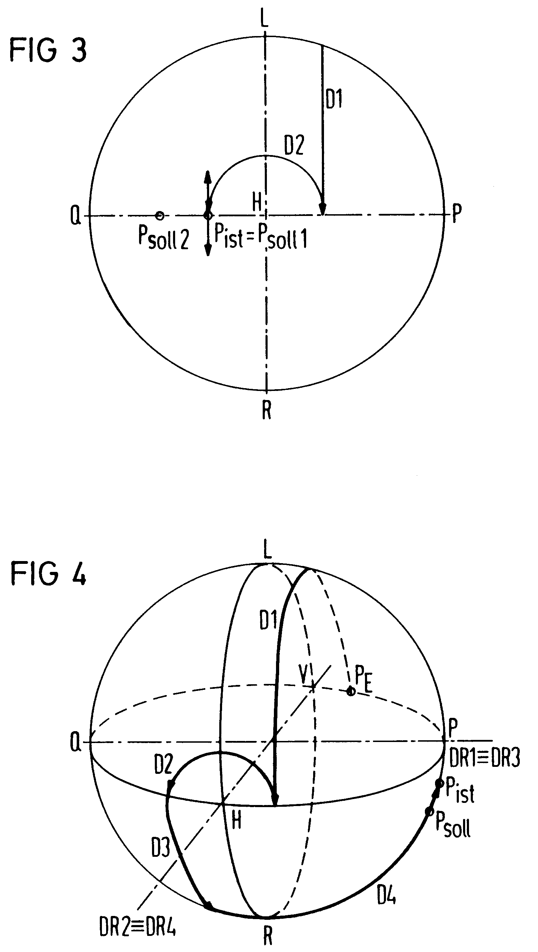

Ein weiterer Störungsfall für die bekannte Polarisationsregelung soll in Verbindung mit Fig. 3 näher erläutert werden. Fig. 3 zeigt dabei eine Seitenansicht in Richtung der Drehachse DR2 des zweiten doppelbrechenden Elementes E2 auf die Poincaré-Kugel. Dabei soll die Polarisation $P_E$ des Lichtes des lokalen Lasers gegenüber der Darstellung nach der Fig. 2 in der horizontalen Ebene in Richtung zum Punkt P verschoben sein. In diesem Fall führt der Verstellweg D1 des ersten doppelbrechenden Elementes nicht durch den Durchstoßpunkt H der Drehachse DR2 des zweiten doppelbrechenden Elementes durch die Poincarésphäre, sondern daneben vorbei bis auf die angedeutete Verbindungslinie zwischen den Punkten P und H. Der Arbeitspunkt des ersten doppelbrechenden Elementes ist in diesem Falle maximal möglich an die gewünschte Soll-Polarisation angenähert, entsprechend wird der erste Gradient zu Null. Auch der Arbeitspunkt des zweiten doppelbrechenden Elementes ist durch den Verstellweg D2 optimal angenähert, so daß in diesem Falle die Ist-Polarisation des Polarisationstransformators mit der Soll-Polarisation übereinstimmt, der Fall der optimalen Ausregelung liegt vor, bei dem beide Gradienten GRAD1, GRAD2 zu Null werden.

Nach der optimalen Ausregelung kann die Soll-Polarisation senkrecht zu den möglichen Polarisationsänderungen, also den möglichen Verstellwegen, des ersten und des zweiten doppelbrechenden Elementes vom Punkte P Soll 1 zum Punkte P Soll 2 auf dem Äquator der Poincaré-Kugel wandern. Auch in diesem Falle kommt es zum Intensitätseinbruch am Ausgang des Detektors DET, da für beide doppelbrechende Elemente eine Weiterregelung nicht möglich ist.

Aus Fig. 3 ist weiterhin erkennbar, daß bei einer Veränderung der Doppelbrechung des ersten doppelbrechenden Elementes, also bei einer Verkürzung oder Verlängerung des Verstellweges D1 der Arbeitspunkt sich vom zweiten Sollwert der Polarisation $P_{Soll}$ 2 wegbewegt, so daß in diesem Falle die Intensität sinkt. Das gleiche gilt für das zweite doppelbrechende Element, auch bei einer Verkürzung oder Verlängerung des zweiten Verstellweges D2 ist keine Annäherung an den zweiten Sollwert $P_{Soll}$ 2 und damit keine Intensitätserhöhung erreichbar.

Aus der Fig. 3 ist erkennbar, daß die Polarisationsregelung blockiert ist, da die Modulationsorientierung, also die Richtung der modulationsbedingten Polarisationsänderung bezogen auf die Poincaré-Kugel für die Arbeitspunkte beider als Stellglieder in der Regelung verwendeten doppelbrechenden Elemente parallel und außerdem senkrecht zu der benötigten Richtung ist. Die parallele Modulationsorientierung für beide Stellelemente der Regelung ergibt sich offenbar immer dann, wenn ein zur Regelung verwendetes Stellelement die an seinem Eingang anliegende Polarisation nicht auf die Drehachse des nächsten geregelten Stellelementes, sondern daran vorbei transformiert. Ausgelöst werden kann diese Blockierung durch eine ungünstige Eingangspolarisation oder durch eine ungünstige Lage der Drehachsen der beiden Stellelemente zueinander, wobei noch zu beachten ist, daß sich die unerwünschten Arbeitspunkte mit einer Periodizität von pi sowohl beim ersten als auch beim zweiten verwendeten Stellelement wiederholen können. Die Zahl der verwendeten Stellelemente ist dabei unerheblich, auch wenn mehr als zwei doppelbrechende Elemente geregelt werden, kann die Regelung blockieren, sofern sich die Drehachsen der zur Regelung verwendeten doppelbrechende Elemente in einer Ebene befinden.

So kann beispielsweise auch bei Verwendung von vier doppelbrechenden geregelten Elementen, deren Drehachsen sich in der Äquatorebene der Poincaré-Kugel befinden, der Fall einstellen, daß die Modulationsorientierungen der Polarisation aller vier Elemente parallel sind. Entsprechend der Erfindung wird deshalb bei Unterschreiten eines vorgegebenen Wertes der Intensität des Vergleichssignals eine neue Modulationsorientierung der Polarisation des am Polarisationstransformatorausgang auftretenden Lichtsignals erzeugt. So ist z.B. in der Fig. 3 leicht erkennbar, daß die Verwendung eines dritten doppelbrechenden Elementes als geregeltes Stellelement, dessen Drehachse der Doppelbrechung mit der Polachse der Poincaré-Kugel, also der Verbindung zwischen den Punkten L und R, zusammenfällt, einen Verstellweg zwischen $P_{IST}$ und $P_{SOLL}$ 2 ermöglicht. Dabei muß die Drehachse der Doppelbrechung des zusätzlichen doppelbrechenden Elementes nicht unbedingt senkrecht zu der durch die Drehachsen der Doppelbrechung der anderen Elemente definierten Ebene der Poincaré-Kugel liegen, es reicht bereits aus, wenn die Drehachse von der genannten Ebene deutlich abweicht. Im letzteren Fall ergibt sich aber eine aufwendigere Regelung, da dann nicht nur der Arbeitspunkt der Doppelbrechung des dritten doppelbrechenden Elementes, sondern auch die Arbeitspunkte der Doppelbrechung des ersten und des zweiten doppelbrechenden Elementes geregelt werden müssen.

Die Entwicklungen auf dem Gebiete der Kristalloptik, also insbesondere die Ausführung eines Polarisationstransformators in Lithiumniobat-Technik, ermöglicht auch die Verstellung der Drehachse der Doppelbrechung der verwendeten doppelbrechenden Elemente. In diesem Fall ist es möglich, bei einer Blockierung der Regelung auf die Zuschaltung eines zusätzlichen doppelbrechenden Elementes zu verzichten und dafür die Drehachse der Doppelbrechung eines der bisher bereits für die Regelung verwendeten Elemente zu verstellen. Dies kann einerseits durch eine Umschaltung der die Drehachse festlegenden Spannung am Lithiumniobat-Polarisationstransformator geschehen. Es ist auch möglich, diese Spannung zusätzlich mit in die Regelung einzubeziehen. In diesem Fall wird dann die neue Modulationsorientierung dadurch erzeugt, daß die Lage der Drehachse der Doppelbrechung wenigstens eines der Elemente moduliert und in Abhängigkeit von der erzeugten Intensität des Vergleichssignals geregelt wird.

Im Hinblick auf die verwendete Technologie kann der Fall eintreten, daß zwar drei doppelbrechende Elemente verwendet werden können, diese aber Drehachsen der Doppelbrechung aufweisen, die alle in der gleichen Ebene liegen. In diesem Fall ist es möglich, entweder das zusätzliche doppelbrechende Element im Lichtweg als erstes Element vorzusehen und zusätzlich mit Stell signalen zu beaufschlagen. Es ist aber auch möglich, das zusätzliche doppelbrechende Element mit einer unmittelbar benachbarten Viertelwellenplatte im Lichtweg zu kombinieren, wobei die Drehachse der Doppelbrechung des zusätzlichen Elements in der gleichen Ebene wie die Drehachsen der Doppelbrechung der anderen Elemente liegen und die Drehachse der Doppelbrechung der Viertelwellenplatte dazu wenigstens annähernd senkrecht ist.

Die neue Modulationsorientierung zur Aufhebung zur Blockade der Regelung kann bei Verwendung nur zweier geregelter Elemente auch dadurch erzeugt werden, daß zunächst die Doppelbrechung eines der beiden Elemente unabhängig von der Regelung um einen vorgegebenen Wert vom eingeregelten Arbeitspunkt weg verstellt wird. Anschließend kann die Regelung wieder einsetzen und wird die Doppelbrechung des zweiten Elementes entsprechend nachregeln. Der vorgegebene Wert ist in seiner Größe dabei davon abhängig, in welchem Maße die verwendeteten doppelbrechende Elemente nichtideale Eigenschaften aufweisen und in welchem Maße sich die Polarisation des Eingangslichtsignals des Polarisationstransformators vom vorgegebenen Wert verändern kann.

In der Fig. 4 ist eine weitere Möglichkeit zur Erzeugung einer neuen Modulationsorientierung für den Polarisationstransformator dargestellt. In diesem Fall ist der Modulationstransformator um zwei doppelbrechende Elemente ergänzt, die zunächst nicht geregelt werden. Beim Blockieren der Regelung schaltet diese das erste und das zweite doppelbrechende Element als Stellglieder ab und schaltet auf das dritte und das vierte doppelbrechende Element um. Die Drehachsen der Doppelbrechung des dritten bzw. vierten Stellelementes können dabei mit den Drehachsen des ersten und des zweiten doppelbrechenden Elementes in einer gemeinsamen Ebene liegen, zweckmäßig ist insbesondere die Einstellung eines Arbeitspunktes bei ungeraden Vielfachen von 90° für die beiden zusätzlichen doppelbrechenden Elemente vor der Übernahme der Regelung. In der Fig. 4 ist erkennbar, daß die zunächst entsprechend Fig. 3 blockierte Regelung durch den Verstellweg D3 des dritten doppelbrechenden Elementes und den Verstellweg D4 des vierten doppelbrechenden Elementes auch senkrecht zu den Modulationsorientierungen des ersten und des zweiten doppelbrechenden Elementes verstellt werden kann. In dem in der Fig. 4 dargestellten Ausführungsbeispiel ergibt sich zwar ein erhöhter Aufwand an doppelbrechenden Elementen, dafür ist aber der zusätzliche Aufwand für den Regler R gering, außerdem ist die Einführung eines zusatzlichen Regelalgorithmus für eine Endlosregelung leichter möglich.

## Patentansprüche

1. Verfahren zur Polarisationsregelung eines kohärenten Lichtsignales, das wenigstens zwei doppelbrechende Elemente eines Polarisationstransformators durchläuft, bei dem die Doppelbrechungen der Elemente in Abhängigkeit von Stellsignalen kontinuierlich verändert werden, wobei die Elemente neben linearer auch elliptische oder zirkulare Doppelbrechung aufweisen können und die Stellsignale durch Vergleich des Polarisationszustandes des zu regelnden Lichtsignals mit einem Referenz-Polarisationszustand eines weiteren Lichtsignals oder eines polarisationsselektiven Elements mittels eines Analysators oder eines Überlagerungsempfänger erzeugt werden und dabei die Intensität sowie die durch Modulation der Dopelbrechung wenigstens eines der doppelbrechenden Elemente auftretenden Änderungen der Intensität des Vergleichssignals bestimmt werden und daraus die Stellsignale erzeugt werden, die die Arbeitspunkte der Doppelbrechung von zwei der doppelbrechenden Elemente so verstellen, daß dadurch die Intensität des Vergleichssignals wahlweise maximiert oder auf einen vorgegebenen Wert eingeregelt werden kann,
**dadurch gekennzeichnet**,
daß bei Unterschreiten eines vorgegebenen Wertes der Intensität des Vergleichssignals eine neue Modulationsorientierung der Polarisation des am Polarisationstransformatorausgang auftretenden Lichtsignals erzeugt wird, wobei die neue Modulationsorientierung möglichst senkrecht zur bisherigen Modulationsorientierung auftritt und unter Modulationsorientierung die Richtung der modulationsbedingten Polarisationsänderungen bezogen auf die Poincaré-Kugel verstanden wird.

2. Verfahren nach Patentanspruch 1,
**dadurch gekennzeichnet,**
daß die neue Modulationsorientierung dadurch erzeugt wird, daß die Drehachse der Doppelbrechung eines der bisher bereits verwendeten Elemente so verstellt wird, daß sie nicht mehr auf der durch die bisherige Lage der Drehachsen der Doppelbrechungen der Elemente definierten Ebene der Poincaré-Kugel liegt.

3. Verfahren nach Patentanspruch 1,

**dadurch gekennzeichnet,**
daß die neue Modulationsorientierung dadurch erzeugt wird, daß ein zusätzliches Element mit einer auf die Poincaré-Kugel bezogenen Drehachse der Doppelbrechung zugeschaltet wird, die nicht in der durch die Drehachsen der Doppelbrechung der anderen Elemente definierten Ebene der Poincaré-Kugel liegt.

4. Verfahren nach Patentanspruch 3,
**dadurch gekennzeichnet,**
daß die Drehachse der Doppelbrechung des zusätzlichen Elements senkrecht zu der durch die Drehachsen der anderen Elemente definierten Ebene der Poincaré-Kugel liegt.

5. Verfahren nach Patentanspruch 1,
**dadurch gekennzeichnet,**
daß die neue Modulationsorientierung dadurch erzeugt wird, daß zwei zusätzliche doppelbrechende Elemente vorgesehen sind, deren Drehachsen der Doppelbrechung bezogen auf die Poincaré-Kugel wahlweiser an gleicher oder anderer Stelle als die Drehachsen der Doppelbrechung ursprünglichen Elemente liegen und daß die Regelung von den ursprünglichen Elementen auf die zusätzlichen Elemente umgeschaltet wird.

6. Verfahren nach Patentanspruch 5,
**dadurch gekennzeichnet,**
daß die Drehachsen der zusätzlichen doppelbrechenden Elemente in derselben Ebene wie die Drehachsen der Doppelbrechung der ursprünglichen Elemente liegen und daß die zusätzlichen Elemente vor der Umschaltung der Regelung auf einen Arbeitspunkt bei ungeraden Vielfachen von 90° voreingestellt sind.

7. Verfahren nach Patentanspruch 1,
**dadurch gekennzeichnet,**
daß die neue Modulationsorientierung dadurch erzeugt wird, daß die Lage der Drehachse der Doppelbrechung wenigstens eines der Elemente moduliert und in Abhängigkeit von der erzeugten Insensität des Vergleichssignals geregelt wird.

8. Verfahren nach Patentanspruch 1,
**dadurch gekennzeichnet,**
daß die neue Modulationsorientierung durch kombinierte Verstellung der Doppelbrechung zweier Elemente erzeugt wird, in dem die Doppelbrechung eines der Elemente unabhängig von der Regelung um einen vorgegebenen Wert verstellt und die Doppelbrechung des zweiten Elements geregelt wird.

9. Verfahren nach Patentanspruch 1,
**dadurch gekennzeichnet,**
daß ein zusätzliches doppelbrechendes Element im Lichtweg als erstes Element vorgesehen ist und die neue Modulationsorientierung dadurch erzeugt wird, daß dieses Element mit Stellsignalen beaufschlagt wird.

10. Verfahren nach Patentanspruch 1,
**dadurch gekennzeichnet,**
daß die neue Modulationsorientierung dadurch erzeugt wird, daß ein zusätzliches doppelbrechendes Element mit einer unmittelbar benachbarten Viertelwellenplatte im Lichtweg durch Stellsignale aktiviert wird, wobei die Drehachse der Doppelbrechung des zusätzlichen Elements in der gleichen Ebene wie die Drehachsen der Doppelbrechung der anderen Elemente liegt und die Drehachse der Doppelbrechung der Viertelwellenplatte dazu wenigstens annähernd senkrecht ist.

FIG 1

FIG 2

FIG 3

FIG 4